# EUROPEAN PATENT SPECIFICATION

(11) **EP 0 641 161 B1**
(45) Date of publication and mention of the grant of the patent: **09.10.1996**
(21) Application number: 92918739.1
(22) Date of filing: 13.08.1992
(51) Int. Cl.: A01N 25/08, A01N 37/10

(54) **DRY, WATER-SOLUBLE, SUBSTITUTED PHENOXY AND/OR BENZOIC ACID HERBICIDES AND METHOD OF PREPARING SAME**
TROCKENE, WASSERLÖSLICHE SUBSTITUIERTE PHENOXY- UND/ODER BENZOESÄURE-HERBIZIDE UND VERFAHREN ZU IHRER HERSTELLUNG
HERBICIDES SECS ET SOLUBLES DANS L'EAU CONTENANT UN ACIDE PHENOXY ET/OU BENZOIQUE SUBSTITUES, ET PROCEDE DE PREPARATION DESDITS HERBICIDES

(30) Priority: 16.08.1991 US 745866; 10.07.1992 US 911757; 10.08.1992 US 928132
(43) Date of publication of application: 08.03.1995
(73) Proprietor: PBI/GORDON CORPORATION, Kansas City, MO 64101 (US)
(72) Inventor: VAN HAFTEN, John, L., Leawood, KS 66209 (US); CAHOY, Roger, P., Overland Park, KS 66204 (US)
(74) Representative: UEXKÜLL & STOLBERG
(86) International application number: US9206852
(87) International publication number: WO9303614

(56) References cited:
- DE-A- 3 226 534
- GB-A- 607 390
- US-A- 2 497 636
- US-A- 3 013 054
- US-A- 3 778 248
- US-A- 4 015 970
- US-A- 5 022 182
- US-A- 5 022 917
- C.R.WORTHING ET AL 'The Pesticide Manual, 9th Edition' 1991 , THE BRITISH CROP PROTECTION COUNCIL , FARNHAM, SURREY, GB * Pages 218, 219, 245, 246, 533 to 535, 539 to 543 *
- S.BUDAVARI ET AL 'The Merck Index, 11th Edition' 1989 , MERCK & CO , RAHWAY, N.J., US * Sections 570, 7647, 7649, 8612 and 8615 *

## Description

### Background of the Invention

### 1. Field of the Invention

This invention relates to water-soluble herbicidal compositions in dry powdered form which include herbicidally active substituted phenoxy and/or benzoic acids that alone are not readily soluble in water.

### 2. Description of the Prior Art

Those herbicidal agents registered for use by commercial applicators are generally sold in concentrated form for economy of transport, and then diluted by the applicator either at a central distribution center, or less frequently at the point of use. The majority of effective herbicides and plant growth regulators are foliarly absorbed and therefore, to be effective, must be applied to the foliage of the target pest species. Other herbicides are root absorbed and the product must be applied in a manner as to be available to the roots of the target. This is commonly accomplished by spraying a dilute water solution, or dispersion of the desired pesticide on the vegetation to be treated. Most herbicides are therefore marketed as either (1) liquid or dry water-soluble formulations, (2) liquid, water emulsifiable formulations, or (3) solid or liquid water dispersible formulations. The concentrated formulations are diluted to the required effective concentration by the person doing the spray application. Thus, in order to obtain optimum effectiveness and to minimize agitation and other mechanical suspension requirements, water-soluble formulations are normally preferred.

Because of the difficulties of manufacturing a dry, soluble form of herbicide, most dry formulations are simply dispersible forms of essentially insoluble active ingredients. Typical examples of formulations are (1) wettable powders, (2) water dispersible granules, or (3) dry flowables. Formulations of these types depend heavily on surfactants and grinding techniques to provide a dry formulation of active ingredients that can be temporarily dispersed or suspended in water for spray application. Even when a dispersion can initially be obtained in water, the time of full dispersion is usually limited, thus requiring stirring, agitation with air, or other mechanical mixing. Dispersions of this type present additional problems in that the material tends to clog spray nozzles and other distribution components, and require the user to prepare smaller than desired batches in order to minimize application problems.

Because of the problems associated with attempting to prepare the dry powdered herbicide, suppliers have resorted in some instances to dissolution of the active ingredient in an organic solvent such as mineral spirits or the like. The concentrated formulation, containing suitable surfactants, is then diluted with water to form a dispersion that again usually necessitates some type of agitation to maintain the phases substantially homogeneous for a useful period of time.

In instances where the herbicides are dissolved in a solvent for shipment as a concentrate, the solvent presents health and physical hazards to the manufacturer as well as the user, the solvents add to the overall cost of the product, and the solvent agent is oftentimes phytotoxic to desirable plant species.

The wettable powders and solvent dissolved herbicides are frequently packaged in plastic containers and disposal of these plastic packages is becoming increasingly difficult from an environmental standpoint.

Substituted phenoxy and/or benzoic acid herbicides such as (2,4-dichlorophenoxy)acetic acid (2,4-D), 4-(2,4-dichlorophenoxy)butanoic acid (2,4-DB), (±)-2-(4-chloro-2-methylphenoxy)propanoic acid (MCPP), (4-chloro-2-methylphenoxy)acetic acid (MCPA), (±)-2-(2,4-dichlorophenoxy)propanoic acid (dichlorprop), 3,6-dichloro-2-methoxybenzoic acid (dicamba), and 3-amino-2,5-dichlorobenzoic acid (chloramben) have long been used to control unwanted vegetation.

These substituted phenoxy and/or benzoic acid herbicides are white crystalline solids with very low vapor pressures and low water solubilities. They are soluble only in alkaline solutions or polar organic solvents.

Phenoxy and/or benzoic acid herbicides are available commercially as acid, ester, alkali metal, and amine salt formulations that can also be applied as mixtures with other herbicides. The alkali metal and especially the amine salt formulations are preferred because they are the most water-soluble and can be more readily applied as aqueous sprays. However, the esters must be applied either as emulsions in water, or as solutions in organic solvents such as oils. 2,4-D for example, is an insoluble crystalline material having a pKₐ of approximately 2.6. For ease of application, 2,4-D is normally converted to a water-soluble amine or mineral salt by the manufacturer and then dissolved by the applicator in a water carrier before use.

However, water-soluble substituted phenoxy and/or benzoic acid salts exhibiting herbicidal activity are difficult to prepare in a dry state. Soluble salts such as potassium or sodium or dimethylamine must be first prepared in water or a solvent and then the solvent removed. This requires special equipment, is energy intensive, and frequently generates undesirable waste products. As a consequence, most dry forms of herbicide that are marketed are not of a soluble type but rather are merely dispersible forms of the essentially insoluble herbicide acid which are distributed as a wettable powder or a wettable, dispersible granule. Although both inorganic and organic salt forms are commercially available, the most common salt form is the dimethylamine salt of the substituted phenoxy or substituted benzoic acid herbicide. Typical formulations range from about 20% to 50% active ingredient concentrations in water or solvent solutions.

### Summary of the Invention

The present invention relates to a method of preparing dry, water-soluble, substituted phenoxy and/or benzoic acid herbicides which are in acid form. The invention also concerns dry phenoxy and/or benzoic acid herbicidal powders which may be dissolved in water at concentrations providing from at least about 0.1% to at least about 2.5 by weight of the active herbicide in the final herbicidal solution.

A dry herbicidal product is preferred over a liquid concentrated herbicide for a number of reasons. Dry formulations are more stable to temperature variations encountered in storage and shipping. For example, freezing can destabilize liquid products interfering with the effectiveness of the herbicide. Similarly, high storage temperatures can lead to solvent losses when an organic solvent is used to dissolve the agent or cause hydrolysis when water is a solvent, thereby adversely affecting active ingredient concentrations.

Dry herbicidal formulations are less dangerous than liquid products. Package leakage during handling is much less likely. If accidentally punctured, dry package leakage is much less severe and easier to clean up than a liquid product. Also, personnel protection is easier to accomplish with dry products because the material cannot as easily splash into the eyes or skin of the applicator. Spills of solvent containing formulations are potentially flammable, further militating against the use of solvents for dissolving the herbicide.

The ease of packaging is significantly enhanced with dry products over liquid formulations and packaging flexibilities are greatly enhanced. Paper containers or wax treated packages can be used, as well as plastic containers. With liquids, specially treated plastic containers or glass containers are normally required. Paper or cardboard packages can be compressed and disposed of much easier than plastic, glass or metal containers.

Transportation costs of dry products are potentially less expensive than is the case where a liquid carrier must also be transported. Although a number of concentrated liquid products having a fairly high active ingredient content are in commercial use, many formulations are sold in the 20-30% active ingredient range with the remainder of the product being water along with a small amount of dispersing agents or product appearance or handling enhancers.

The preferred dry, water-soluble, substituted phenoxy and/or benzoic acid herbicides of the subject invention are prepared by dry blending the herbicidal agent with a substantially solid solubilization medium for the herbicidal agent which is selected from the group consisting of diammonium phosphate (DAP), dipotassium phosphate (DPP) and disodium phosphate (DSP). As an alternate, although less preferred embodiment of the invention, the phenoxy and/or benzoic acid herbicidal agent is dry blended with a quantity of solid, substantially anhydrous, trisodium phosphate (TSP) or anhydrous tripotassium phosphate (TPP) which serves as a solubilization medium for the agent. The solubilization medium and herbicial agent powders are dry blended in the absence of chemical reaction therebetween. A sufficient amount of the phosphate solubilization medium is provided in the dry blended mixture in relationship to the quantity of herbicidal agent combined therewith to cause the dry blended mixture to substantially dissolve in water during preparation of a herbicidal solution which contains an adequate proportion of the herbicidal agent to provide from about 0.1% to about 2.5% by weight off the active herbicide in the herbicidal solution.

In the case of the preferred composition containing DAP, DPP or DSP, a sufficient amount of the phosphate solubilization medium is dry blended with the dry substituted phenoxy and/or benzoic acid herbicidal agent to provide at least about 1 mole and preferably about 1.15 moles of the phosphate medium for each mole of active herbicidal agent in the dry blended mixture. When TSP or TPP is used as the solubilization medium, a sufficient amount of the TSP or TPP is dry blended with the dry substituted phenoxy and/or benzoic acid herbicidal agent to provide from at least about 0.6 mole to about 1.15 moles of the phosphate medium for each mole of active herbicidal agent in the dry blended mixture.

The water-soluble substituted phenoxy and/or benzoic acid herbicides are easily manufactured by dry blending the ingredients in powdered form. No unusual manufacturing techniques are required such as grinding to vary fine sizes or classification procedures normally necessary to obtain a suitable disparsible product. Product raw material costs are comparable to widely used organic amine phenoxy and/or benzoic acid herbicide formulations currently being marketed. The raw materials are all commercially available and readily obtainable at competitive prices. In addition to the active herbicidal ingredients, the dry blended water-soluble substituted phenoxy and/benzoic acid herbicide contains nitrogen, phosphorous or potassium ingredients. These are all potentially useful as nutrients to non-susceptible species.

### Detailed Description of the Invention

In the preferred powdered herbicide composition, a quantity of a substantially solid herbicidal agent selected from the group consisting of substituted herbicidally active phenoxy acids and substituted herbicidally active benzoic acids, which are not readily soluble in water, is added to an amount of a substantially solid solubilization medium for the herbicidal agent and selected from the group consisting of diammonium phosphate (DAP), dipotassium phosphate (DPP) and disodium phosphate (DSP). A somewhat less preferred although fully operable composition employs trisodium phosphate (TSP) or tripotassium phosphate (TPP) as the solubilization medium.

Examples of useful phenoxy and/or benzoic acid herbicides are (2,4-dichlorophenoxy)acetic acid (2,4-D), 4-(2,4-dichlorophenoxy)butanoic acid (2,4-DB), (±)-2-(4-chloro-2-methylphenoxy)propanoic acid (MCPP), (4-chloro-2-methylphenoxy)acetic acid (MCPA), (±)-2-(2,4-dichlorophenoxy)propanoic acid (dicamba), and 3-amino-2,5-dichlorobenzoic acid (chloramben). The phenoxy and/or benzoic acid herbicides may be used alone or as combinations thereof. Preferred formulations include about 50 weight percent of the active herbicidal acid or combinations thereof, although in certain instances up to about 60 weight percent of the active herbicidal agent or combinations thereof may be used.

The herbicidal agent and the phosphate solubilization medium are dry blended to produce a substantially homogeneous mixture thereof. This dry blended mixture may be packaged in paper containers, or other suitable packages, without further processing such as pulverization, extended grinding, or critical classification. However, the particle size is preferably small enough to permit relatively rapid wetting when added to water. At least about 1 mole and preferably about 1.15 moles of the DAP, DPP or DSP solubilization medium is provided for each mole of active herbicidal agent in the dry blended mixture. However, where TSP or TPP is used as the solubilization medium, the mole ratio of the solubilization medium to the herbicidal agent is maintained in the range of about 0.6 to about 1.15.

### Example I

The following ingredients were dry blended:

| **Ingredients** | **% Active Ingredients** | **Weight % Reagents** | **Makeup for Grinding of 500 Grams - In Grams** | **HLPC (High Performance Liquid Chromatography Analysis)** |
|---|---|---|---|---|
| 1. 2,4-D Acid -Tech. Grade - 98% | 31.16 | 31.80 | 159.0 | 31.02 |
| 2. MCPP Acid -Tech. Grade -94.5% | 15.70 | 16.61 | 83.1 | 15.50 |
| 3. Dicamba - Tech. Grade - 88% | 3.14 | 3.57 | 17.9 | 3.11 |
| 4. Sodium Lignosulfonate -Marasperse CBOS-4 - Borrgaard Industries | | 1.00 | 5.0 | |
| 5. DAP -Diammonium Phosphate - Reagent Grade - 98% | | 46.02 | 230.0 | |
| 6. 8µ Precipitated Silica Powder | | 1.00 | 5.0 | |

Ingredients 1-5 inclusive were dry blended under conditions producing an average particle size of about 50µ and then placed in a capped glass container. Thereafter, the precipitated silica was added as a coating agent to prevent the product from picking up excessive moisture from the atmosphere.

It has been determined through laboratory testing that technical grade diammonium phosphate may be used in preparing the dry blended water-soluble substituted phenoxy acid/substituted benzoic acid herbicidal composition. The molecular weight of diammonium phosphate is 132.06 and when calculated on 100% basis, a chemical analysis yields 21.22% nitrogen, 23.45% phosphorous and 53.73% P₂O₅. Technical grade diammonium phosphate usually has a density of about 962-1025 kg./cu. meter (60-64 lbs/cu. ft.). The pH of a 1% solution is 8.0 and a typical screen analysis yields:
Cumulative Retention on 20 Tyler Standard Screen 24-50%
Cumulative Retention on 35 Tyler Standard Screen 70-85%
Cumulative Retention on 65 Tyler Standard Screen 83-95%
Cumulative Retention on 100 Tyler Standard Screen 91-98%
Cumulative Retention on 200 Tyler standard Screen 95.99%

Diammonium phosphate is the preferred solubilization medium because it is a commonly available agricultural chemical, it is less expensive than dipotassium phosphate or disodium phosphate, it has the lowest molecular weight thereby minimizing the amount required in the formulation and it contributes ammonia as well as phosphorous to non-susceptible plants.

The next preferred solubilization medium is disodium phosphate because it has a lower molecular weight than potassium phosphate, thus permitting use of a lesser amount of the additive.

### Example II

A mixture comprising 3.25 g of technical grade 2,4-D acid (96%), 1.69 g of MCPP acid (93%), 0.37 g of dicamba (86%), 0.1 g of sodium lignosulfonate, and 4.59 g of commercially available disodium phosphate (anhydrous) were ground to a fine, dry powder (about 50µ) in a laboratory analytical mill. The mixture was transferred to a capped glass container. A 2 g sample of the 50% active herbicide powder was added to a glass stoppered graduated cylinder which contained 98 milliliters of city water. The stoppered cylinder was twice inverted and allowed to stand on the bench top at ambient temperature. By visual inspection, all solids had dissolved within 15 minutes of mixing. The clear aqueous solution was light brown in color.

### Example III

A mixture comprising 1.62 g of technical grade 2,4-D acid (96%), 0.84 g of MCPP acid (93%), 0.18 g of dicamba (86%), 0.1 g of sodium lignosulfonate, and 7.26 g of dipotassium phosphate (anhydrous) were ground to a fine powder in a laboratory analytical mill. The mixture was transferred to a capped glass container. A prepared aqueous sample containing 2.0 weight percent of the 25% active herbicide powder yielded a clear solution within two minutes. Preparation of the clear solution did not require heating or agitation.

Useful herbicidal compositions in accordance with this invention may be prepared by combining on a parts by weight basis:

### Example IV

32.4 parts of technical grade 2,4-D (100% basis)
14.5 parts of MCPP (100% basis)
2.1 parts of dicamba (100% basis)
45 parts of diammonium phosphate (98%)

### Example V

50 parts of MCPA (100% basis)
45.4 parts of disodium phosphate (anhydrous)

### Example VI

50 parts of MCPA (100% basis)
45.9 parts of diammonium phosphate (98%)

### Example VII

50 parts of dicamba (100% basis)
40.7 parts of diammonium phosphate (98%)

### Example VIII

50 parts of 2,4-D (100% basis)
45.9 parts of diammonium phosphate (98%)

Two parts of each of the compositions set out in Examples IV to VIII inclusive when added to 98 parts of water, yielded a clear solution within two minutes. The herbicidal agent and the phosphate solubilization medium may be ground separately and then blended, or ground together. The dry blended product has a particle size from about 50µ to about 100µ with the preferred size being about 50µ.

The dry, water-soluble, substituted phenoxy and/or benzoic acid herbicides of the invention are preferably applied to susceptible flora at rates of from about 1362-1816 grams (3-4 lbs.) of the dry powder (containing 50% active herbicidal agents) in the 75-908 liter (20-240 gal.) of water per 0.4 Ha (1 acre). Thus, 7.5 to 10 parts of dry powder are provided in 400-4800 parts of water for each hectare of coverage.

Examples of compositions employing TSP and TPP as the solubilization medium include the following:

### Example IX

The following ingredients were dry blended:

| **Ingredients** | **% Active Ingredients** | **Weight % Reagents** | **Makeup for Grinding of 20 Grams - In Grams** | **HLPC (High Performance Liquid Chromatography Analysis)** |
|---|---|---|---|---|
| 1. 2,4-D Acid -Tech. Grade-(96%) | 31.16 | 32.46 | 6.49 | 30.94 |
| 2. MCPP Acid -Tech. Grade (Dry, 95%) | 15.70 | 16.53 | 3.31 | 15.61 |
| 3. Dicamba - Tech. Grade - (86%) | 3.14 | 3.65 | 0.73 | 3.18 |
| 4. Sodium naphthalenesulfonate formaldehyde polymer (Lomar PW -Henkel) | | 1.00 | 0.20 | |
| 5. Sorbitan tristearate (SPAN -65 - ICI) | | 1.00 | 0.20 | |
| 6. Spray dry synthetic silica (Wessalon 50-S -N.A. Silica Co.) | | 5.00 | 1.00 | |
| 7. Trisodium phosphate (Anhyd) | | 40.36 | 8.07 | |
| TOTALS | | 100.00% | 20.00 gms. | |

Ingredients 1-7 of Example IX were ground to a fine, dry powder (averaging about 50 microns particle size) in a laboratory analytical mill. The mixture was transferred to a capped glass container. A 2 gm. sample of the 50% active herbicide powder prepared in accordance with Example IX was added to a glass graduated cylinder which contained 98 ml. of city water. The stoppered cylinder was inverted several times over a period of 5 minutes. The 2 weight percent of herbicidal agent added to the water dissolved, with only a small quantity silica remaining as a dispersion. After 96 hours in an oven at 50°C, a sample of the powder indicated no visible changes.

### Example X

The following ingredients were dry blended:

| **Ingredients** | **% Active Ingredients** | **Weight % Reagents** | **Makeup for Grinding of 20 Grams - In Grams** | **HLPC (High Performance Liquid Chromatography Analysis)** |
|---|---|---|---|---|
| 1. 2,4-D Acid -Tech. Grade-(97%) | 36.63 | 37.76 | 7.55 | 37.42 |
| 2. MCPP Acid -Tech. Grade (Dry, 95%) | 19.48 | 20.51 | 4.10 | 18.87 |
| 3. Dicamba - Tech. Grade - (86%) | 3.89 | 4.52 | 0.90 | 3.65 |
| 4. Sodium naphthalenesulfonate formaldehyde polymer (Lomar PW) | | 1.00 | 0.20 | |
| 5. Sorbitan tristearate (SPAN-65) | | 1.00 | 0.20 | |
| 6. Spray dry synthetic silica (Wessalon 50-S) | | 5.00 | 1.00 | |
| 7. Trisodium phosphate (Anhyd) | | 30.21 | 6.05 | |
| TOTALS | | 100.00% | 20.00 gms. | |

Ingredients 1-7 of Example X were ground to a fine, dry powder (averaging about 50 microns particle size) in a laboratory analytical mill. The mixture was transferred to a capped glass container. A 2 gm. sample of the 60% active herbicide powder prepared in accordance with Example X was added to a glass graduated cylinder which contained 98 ml. of city water. The stoppered cylinder was inverted several times over a period of 5 minutes. The 2 weight percent of herbicidal agent added to the water dissolved, with only a small quantity of silica remaining as a dispersion. After 96 hours in an oven at 50°C, a sample of the powder indicated no visible changes.

### Example XI

The following ingredients were dry blended:

| **Ingredients** | **% Active Ingredients** | **Weight % Reagents** | **Makeup for Grinding of 20 Grams - In Grams** | **HLPC (High Performance Liquid Chromatography Analysis)** |
|---|---|---|---|---|
| 1. 2,4-D Acid -Tech. Grade-(97%) | 31.16 | 32.46 | 6.49 | 32.45 |
| 2. MCPP Acid -Tech. Grade (Dry, 95%) | 15.70 | 16.53 | 3.31 | 15.39 |
| 3. Dicamba - Tech. Grade - (86%) | 3.14 | 3.65 | 0.73 | 3.27 |
| 4. Sodium naphthalenesulfonate formaldehyde polymer (Lomar PW) | | 1.00 | 0.20 | |
| 5. Sorbitan tristearate (SPAN-65) | | 1.00 | 0.20 | |
| 6. Spray dry synthetic silica (Wessalon 50-S) | | 5.00 | 1.00 | |
| 7. Tripotassium phosphate (Anhyd) | | 40.36 | 8.07 | |
| TOTALS | | 100.00% | 20.00 gms. | |

Ingredients 1-7 of Example XI were ground to a fine, dry powder (averaging about 50 microns particle size) in a laboratory analytical mill. The mixture was transferred to a capped glass container. A 2 gm. sample of the 50% active herbicide powder prepared in accordance with Example XI was added to a glass graduated cylinder which contained 98 ml. of city water. The stoppered cylinder was inverted several times over a period of 5 minutes. The 2 weight percent of herbicidal agent added to the water dissolved, with only a small quantity of silica remaining as a dispersion. After 96 hours in an oven at 50°C, a sample of the powder indicated no visible changes.

On a parts by weight basis, the preferred dry, water soluble substituted phenoxy and/or benzoic acid herbicide powder composition (50% by weight active ingredient) consists essentially of, on an approximately 100% active ingredient basis, about 31 parts of dry, solid powder particles of 2,4-D, about 16 parts of dry, solid powder particles of MCPP, about 3 parts of dry, solid powder particles of dicamba, and about 40 parts of anhydrous TSP or anhydrous TPP.

In the case of 60 weight percent active ingredients, the preferred herbicidal powder composition consists essentially of, on an approximately 100% active ingredient basis, about 37 parts of dry, solid powder particles of 2, 4-D, about 20 parts of dry, solid powder particles of MCPP, about 4 parts of dry, solid powder particles of dicamba, and about 30 parts of anhydrous TSP.

### Example XII

A prepared aqueous sample containing 2.0 weight percent of the 50% or 60% active herbicide powder in all instances yielded a clear solution within two minutes. It was not necessary to heat or agitate the product to maintain the ingredients in solution while sitting on a shelf for several days at room temperature. Tests of the dry blended material dissolved in water yielded clear solutions at levels of 0.5%, 1%, 2%, and 4 weight percent. Cloudiness started to appear at a level above about 5 weight percent, and 10 weight percent samples were found to be at least partially insoluble. Weight percent in this respect means 1 gram of the active dry powder for each 99 milliliters of tap water. Normal herbicide application concentrations range from about 1/2 weight percent of the active acid to about 2% of the active acid.

## Claims

1. A stable water-soluble substituted phenoxy and/or benzoic acid herbicide powder composition which contains a quantity of a substantially solid herbicidal agent selected from the group consisting of substituted herbicidally active phenoxy acids or substituted herbicidally active benzoic acids, which alone are not readily soluble in water, characterized in that there is provided
a dry blended admixture of
a first quantity of dry, powder particles of the solid herbicidal agent with
a second quantity of dry, solid, powder particles selected from the group consisting of at least about 1 mole for each mole of herbicidal agent of one of diammonium phosphate, dipotassium phosphate, and disodium phosphate, or at least about 0.6 mole for each mole of herbicidal agent of one of trisodium phosphate and tripotassium phosphate as a solubilization medium for the herbicidal agent,
said first and second quantities of the herbicidal agent and the solubilization medium being the predominate constituents of the composition,
said herbicidal agent and the solubilization medium having been dry blended in powdered form without changing the physical state of the particles to retain the discrete particulate character of each of said first and second quantities of said particles, and in the absence of chemical reaction between said herbicidal agent and said solubilization medium to form a relatively uniform dry mixture thereof,
there being a sufficient quantity of the phosphate medium in the dry blended mixture in relationship to the quantity of herbicidal agent combined therewith such that the dry blended powder mixture will dissolve in water during preparation of a herbicidal solution therefrom that contains an adequate proportion of the herbicidal agent to provide from about 0.1 to about 2.5% by weight of the active herbicidal agent in the herbicidal solution.

2. A herbicide as set forth in claim 1 wherein said dry solubilization medium is diammonium phosphate.

3. A herbicide as set forth in Claim 1 wherein said dry solubilization medium is dipotassium phosphate.

4. A herbicide as set forth in Claim 1 wherein said dry solubilization medium is disodium phosphate.

5. A herbicide as set forth in Claim 1 wherein said dry solubilization medium is trisodium phosphate.

6. A herbicide as set forth in Claim 1 wherein said dry solubilization medium is tripotassium phosphate.

7. A herbicide as set forth in Claim 1 wherein the dry blended admixture includes a mixture of substituted phenoxy acid and substituted benzoic acid herbicides.

8. A herbicide as set forth in Claim 1 wherein said active substituted phenoxy acid herbicidal agent is 2,4-dichlorophenoxy acetic acid..

9. A herbicide as set forth in Claim 1 wherein said active substituted phenoxy acid herbicidal agent is 4-(2,4-dichlorophenoxy)butanoic acid.

10. A herbicide as set forth in Claim 1 wherein said active substituted phenoxy acid herbicidal agent is (±)-2-(2,4-dichlorophenoxy)propanoic acid.

11. A herbicide as set forth in Claim 1 wherein said active substituted benzoic acid herbicidal agent is (4-chloro-2-methylphenoxy)acetic acid.

12. A herbicide as set forth in Claim 1 wherein said active substituted phenoxy acid herbicidal agent is (±)-2-(2,4-dichlorophenoxy)propanoic acid.

13. A herbicide as set forth in Claim 1 wherein said active substituted benzoic acid herbicidal agent is 3,6-dichloro-2-methoxybenzoic acid.

14. A herbicide as set forth in Claim 1 wherein said active substituted benzoic acid herbicidal agent is 3-amino-2,5-dichlorobenzoic acid.

15. A method of preparing a stable water-soluble substituted phenoxy and/or benzoic acid herbicide powder composition containing a quantity of a substantially solid herbicidal agent selected from the group consisting of herbicidally active phenoxy acids and substituted herbicidally active benzoic acids, which are not readily soluble in water, characterized by the steps of
providing a first quantity of dry, powder particles of the solid herbicidal agent,
providing a second quantity of dry, solid, powder particles selected from the group consisting of at least about 1 mole for each mole of herbicidal agent of one of diammonium phosphate, dipotassium phosphate, and disodium phosphate, or at least about 0.6 mole for each mole of herbicidal agent of one of trisodium phosphate and tripotassium phosphate as a solubilization medium for the herbicidal agent,
said first and second quantities of the herbicidal agent and the solubilization medium being the predominate constituents of the composition,
dry blending the herbicidal agent and the solubilization medium in powdered form without changing the physical state of the particles to retain the discrete particulate character of each of said first and second quantities of said particles, and in the absence of chemical reaction between said herbicidal agent and said solubilization medium to produce a relatively uniform dry mixture thereof,
a sufficient quantity of the phosphate solubilization medium being provided in the dry blended mixture in relationship to the quantity of herbicidal agent combined therewith to cause the powdered dry blended mixture to substantially dissolve in water during preparation by the applicator of a herbicidal solution which contains an adequate proportion of the herbicidal agent to provide from about 0.1% to about 2.5% by weight of the active herbicidal agent in the herbicidal solution.

16. A method as set forth in Claim 15 wherein said solubilization medium is selected from the group consisting of diammonium phosphate, dipotassium phosphate, and disodium phosphate, and a sufficient amount of the phosphate medium is present in the dry blended mixture to provide at least about 1 mole of the medium for each mole of active herbicidal agent in the initially dry blended mixture.

## Patentansprüche

1. Stabile, in Wasser lösliche, substituierte Phenoxy- und/oder Benzoesäure-Herbizidpulverzusammensetzung, die eine Menge eines im wesentlichen festen herbiziden Mittels ausgewählt aus der Gruppe bestehend aus substituierten, herbizid wirksamen Phenoxysäuren oder substituierten, herbizid wirksamen Benzoesäuren enthält, die allein in Wasser nicht leicht löslich sind, dadurch gekennzeichnet, daß
eine trocken gemischte Mischung aus einer ersten Menge von trockenen Pulverteilchen des festen herbiziden Mittels mit einer zweiten Mengen von trockenen, festen Pulverteilchen, ausgewählt aus der Gruppe bestehend aus mindestens etwa 1 Mol für jedes Mol an herbizidem Mittel von einem von Diammoniumphosphat, Dikaliumphosphat und Dinatriumphosphat oder mindestens etwa 0,6 Mol für jedes Mol an herbizidem Mittel von einem von Trinatriumphosphat und Trikaliumphosphat als Solubilisierungsmittel für das herbizide Mittel bereitgestellt wird,
wobei die ersten und zweiten Mengen des herbiziden Mittels und des Solubilisierungsmediums die überwiegenden Bestandteile der Zusammensetzung sind und das herbizide Mittel und das Solubilisierungsmedium trocken in gepulverter Form gemischt worden sind, ohne den physikalischen Zustand der Teilchen zu verändern, um den diskreten Teilchencharakter von jeder der ersten und zweiten Mengen dieser Teilchen beizubehalten, sowie in Abwesenheit einer chemischen Reaktion zwischen dem herbiziden Mittel und dem Solubilisierungsmedium, um eine relativ gleichförmige trockene Mischung derselben zu bilden,
wobei eine ausreichende Menge des Phosphatmediums in der trocken gemischten Mischung in Bezug auf die Menge des damit kombinierten herbiziden Mittels vorliegt, so daß die trocken gemischte Pulvermischung sich während der Herstellung einer herbiziden Lösung daraus, die einen ausreichenden Anteil des herbiziden Mittels enthält, um etwa 0,1 bis etwa 2,5 Gew.-% des wirksamen herbiziden Mittels in der herbiziden Lösung zu liefern, in Wasser löst.

2. Herbizid nach Anspruch 1, bei dem das trockene Solubilierungsmedium Diammoniumphosphat ist.

3. Herbizid nach Anspruch 1, bei dem das trockene Solubilierungsmedium Dikaliumphosphat ist.

4. Herbizid nach Anspruch 1, bei dem das trockene Solubilierungsmedium Dinatriumphosphat ist.

5. Herbizid nach Anspruch 1, bei dem das trockene Solubilierungsmedium Trinatriumphosphat ist.

6. Herbizid nach Anspruch 1, bei dem das trockene Solubilierungsmedium Trikaliumphosphat ist.

7. Herbizid nach Anspruch 1, bei dem die trocken gemischte Mischung eine Mischung von substituierten Phenoxysäure- und substituierten Benzoesäureherbiziden umfaßt.

8. Herbizid nach Anspruch 1, bei dem das wirksame substituierte Phenoxysäureherbizid 2,4-Dichlorphenoxyessigsäure ist.

9. Herbizid nach Anspruch 1, bei dem das wirksame substituierte Phenoxysäureherbizid 4-(2,4-Dichlorphenoxy)butansäure ist.

10. Herbizid nach Anspruch 1, bei dem das wirksame substituierte Phenoxysäureherbizid (±)-2-(2,4-Dichlorphenoxy)propansäure ist.

11. Herbizid nach Anspruch 1, bei dem das wirksame substituierte Benzoesäureherbizid (4-Chlor-2-methylphenoxy)essigsäure ist.

12. Herbizid nach Anspruch 1, bei dem das wirksame substituierte Phenoxysäureherbizid (±)-2-(2,4-Dichlorphenoxy)propansäure ist.

13. Herbizid nach Anspruch 1, bei dem das wirksame substituierte Benzoesäureherbizid 3,6-Dichlor-2-methoxybenzoesäure ist.

14. Herbizid nach Anspruch 1, bei dem das wirksame substituierte Benzoesäureherbizid 3-Amino-2,5-dichlorbenzoesäure ist.

15. Verfahren zur Herstellung einer stabilen, in Wasser löslichen, substituierten Phenoxy- und/oder Benzoesäure-Herbizidpulverzusammensetzung, die eine Menge eines im wesentlichen festen herbiziden Mittels ausgewählt aus der Gruppe bestehend aus herbizid wirkenden Phenoxysäuren und substituierten herbizid wirkenden Benzoesäuren enthält, die in Wasser nicht leicht löslich sind, dadurch gekennzeichnet, daß
eine erste Menge von trockenen Pulverteilchen des festen herbiziden Mittels bereitgestellt werden,
eine zweiten Mengen von trockenen, festen Pulverteilchen, ausgewählt aus der Gruppe bestehend aus mindestens etwa 1 Mol für jedes Mol an herbizidem Mittel von einem von Diammoniumphosphat, Dikaliumphosphat und Dinatriumphosphat oder mindestens etwa 0,6 Mol für jedes Mol an herbizidem Mittel von einem von Trinatriumphosphat und Trikaliumphosphat als Solubilisierungsmedium für das herbizide Mittel bereitgestellt wird,
wobei die ersten und zweiten Mengen des herbiziden Mittels und des Solubilisierungsmediums die überwiegenden Bestandteile der Zusammensetzung bilden,
das herbizide Mittel und das Solubilisierungsmedium in gepulverter Form ohne Veränderung des physikalischen Charakters der Teilchen trocken gemischt werden, um den diskreten Teilchencharakter von jeder der ersten und zweiten Mengen der Teilchen aufrechtzuerhalten, sowie in Abwesenheit einer chemischen Reaktion zwischen dem herbiziden Mittel und dem Solubilisierungsmedium, um eine relativ gleichförmige, trockene
Mischung derselben herzustellen,
eine ausreichende Menge des Phosphatsolubilisierungsmediums in der trocken gemischten Mischung in Bezug auf die Menge des damit kombinierten herbiziden Mittels bereitgestellt wird, um die gepulverte, trocken gemischte Mischung dazu zu bringen, sich in Wasser während der Herstellung durch den Anwender einer herbiziden Lösung, die einen ausreichenden Anteil des herbiziden Mittels enthält, um etwa 0,1 bis etwa 2,5 Gew.-% des wirksamen herbiziden Mittels in der herbiziden Lösung zu liefern, im wesentlichen zu lösen.

16. Verfahren nach Anspruch 15, bei dem das Solubilisierungsmedium ausgewählt ist aus der Gruppe bestehend aus Diammoniumphosphat, Dikaliumphosphat und Dinatriumphosphat und eine ausreichende Menge des Phosphatmediums in der trocken gemischten Mischung vorhanden ist, um mindestens etwa 1 Mol des Mediums für jedes Mol an wirksamem herbizidem Mittel in der anfangs trocken gemischten Mischung zu liefern.

## Revendications

1. Composition herbicide en poudre stable soluble dans l'eau d'acide à groupement phénoxy substitué et/ou benzoïque substitué qui contient une certaine quantité d'un agent herbicide sensiblement solide choisi dans le groupe constitué des acides à groupement phénoxy substitué à activité herbicide et des acides benzoïques substitués à activité herbicide, qui seuls ne sont pas facilement solubles dans l'eau, caractérisée en ce qu'on propose
un mélange mélangé par voie sèche de :
une première quantité de particules en poudre sèches de l'agent herbicide solide et
une deuxième quantité de particules en poudre sèches solides choisies dans le groupe constitué d'au moins environ 1 mol pour chaque mole de l'agent herbicide d'un élément parmi le phosphate de diammonium, le phosphate dipotassique et le phosphate disodique et au moins environ 0,6 mol pour chaque mole de l'agent herbicide d'un élément parmi le phosphate trisodique et le phosphate tripotassique en tant que milieu de solubilisation de l'agent herbicide,
lesdites première et deuxième quantités de l'agent herbicide et du milieu de solubilisation étant les constituants prédominants de la composition,
ledit agent herbicide et ledit milieu de solubilisation ayant été mélangés par voie sèche sous forme de poudre sans modification de l'état physique des particules pour maintenir le caractère particulaire discret de chacune desdites première et deuxième quantités desdites particules et en l'absence d'une réaction chimique entre ledit agent herbicide et ledit milieu de solubilisation pour former un mélange sec relativement uniforme,
ce en une quantité suffisante du milieu de type phosphate dans le mélange mélangé par voie sèche en relation avec la quantité de l'agent herbicide associé, de sorte que le mélange en poudre mélangé par voie sèche se dissout dans l'eau lors de la préparation d'une solution herbicide qui contient une proportion adéquate de l'agent herbicide pour fournir d'environ 0,1 à 2,5 % en masse de l'agent herbicide actif dans la solution herbicide.

2. Herbicide selon la revendication 1, dans lequel ledit milieu de solubilisation sec est le phosphate de diammonium.

3. Herbicide selon la revendication 1, dans lequel ledit milieu de solubilisation sec est le phosphate dipotassique.

4. Herbicide selon la revendication 1, dans lequel ledit milieu de solubilisation sec est le phosphate disodique.

5. Herbicide selon la revendication 1, dans lequel ledit milieu de solubilisation sec est le phosphate trisodique.

6. Herbicide selon la revendication 1, dans lequel ledit milieu de solubilisation sec est le phosphate tripotassique.

7. Herbicide selon la revendication 1, dans lequel le mélange mélangé par voie sèche comprend un mélange d'herbicides du type acide à groupement phénoxy substitué et acide benzoïque substitué.

8. Herbicide selon la revendication 1, dans lequel ledit agent herbicide acitif du type acide à groupement phénoxy substitué est l'acide (2,4-dichlorophénoxy)acétique.

9. Herbicide selon la revendication 1, dans lequel ledit agent herbicide actif du type acide à groupement phénoxy substitué est l'acide 4-(2,4-dichlorophénoxy)butanoïque.

10. Herbicide selon la revendication 1, dans lequel ledit agent herbicide actif du type acide à groupement phénoxy substitué est l'acide (±)-2-(2,4-dichlorophénoxy)propanoïque.

11. Herbicide selon la revendication 1, dans lequel ledit agent herbicide actif du type acide benzoïque substitué est l'acide (4-chloro-2-méthylphénoxy)acétique.

12. Herbicide selon la revendication 1, dans lequel ledit agent herbicide actif du type acide à groupement phénoxy substitué est l'acide (±)-2-(2,4-dichlorophénoxy)propanoïque.

13. Herbicide selon la revendication 1, dans lequel ledit agent herbicide actif du type acide benzoïque substitué est l'acide 3,6-dichloro-2-méthoxybenzoïque.

14. Herbicide selon la revendication 1, dans lequel ledit agent herbicide actif du type acide benzoïque substitué est l'acide 3-amino-2,5-dichlorobenzoïque.

15. Procédé de préparation d'une composition herbicide en poudre stable soluble dans l'eau d'acide à groupement phénoxy substitué et/ou benzoïque substitué contenant une certaine quantité d'un agent herbicide sensiblement solide choisi dans le groupe constitué des acides à groupement phénoxy à activité herbicide et des acides benzoïques substitués à activité herbicide, qui ne sont pas facilement solubles dans l'eau, caractérisé par les étapes consistant à
fournir une première quantité de particules en poudre sèches de l'agent herbicide solide,
fournir une deuxième quantité de particules en poudre sèches solides choisies dans le groupe constitué d'au moins environ 1 mol pour chaque mode de l'agent herbicide d'un élément parmi le phosphate de diammonium, le phosphate dipotassique et le phosphate disodique et au moins environ 0,6 mol pour chaque mode de l'agent herbicide d'un élément parmi le phosphate trisodique et le phosphate tripotassique en tant que milieu de solubilisation de l'agent herbicide,
lesdites première et deuxième quantités de l'agent herbicide et du milieu de solubilisation étant les constituants prédominants de la composition,
mélanger par voie sèche l'agent herbicide et le milieu de solubilisation sous forme de poudre sans modification de l'état physique des particules pour conserver le caractère particulaire discret de chacune desdites première et deuxième quantités desdites particules et en l'absence d'une réaction chimique entre ledit agent herbicide et ledit milieu de solubilisation pour produire un mélange sec relativement uniforme,
une quantité suffisante du milieu de solubilisation de type phosphate étant fournie dans le mélange mélangé par voie sèche en relation avec la quantité de l'agent herbicide associé pour provoquer la dissolution sensible du mélange en poudre mélangé par voie sèche dans l'eau lors de la préparation par l'applicateur d'une solution herbicide qui contient une proportion adéquate de l'agent herbicide pour fournir d'environ 0,1 à 2,5 % en masse de l'agent herbicide actif dans la solution herbicide.

16. Procédé selon la revendication 15, dans lequel ledit milieu de solubilisation est choisi dans le groupe constitué du phosphate de diammonium, du phosphate dipotassique et du phosphate disodique et une quantité suffisante du milieu de type phosphate est présente dans le mélange mélangé par voie sèche pour fournir au moins environ 1 mol du milieu pour chaque mole de l'agent herbicide actif dans le mélange initialement mélangé par voie sèche.
